Europäisches Patentamt

European Patent Office

Office européen des brevets

(19)

(11) Numéro de publication : **0 147 302**
**B1**

# (12) FASCICULE DE BREVET EUROPÉEN

(45) Date de publication du fascicule du brevet :
21.01.87

(51) Int. Cl.⁴ : **B 23 K 11/30**

(21) Numéro de dépôt : **84402626.0**

(22) Date de dépôt : **18.12.84**

(54) Electrode pour le soudage par résistance.

(30) Priorité : 29.12.83 FR 8320993

(43) Date de publication de la demande :
03.07.85 Bulletin 85/27

(45) Mention de la délivrance du brevet :
21.01.87 Bulletin 87/04

(84) Etats contractants désignés :
DE GB IT SE

(56) Documents cités :
GB-A- 16 958
US-A- 2 214 760
US-A- 4 288 024

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Guedon, Bernard**
**1 quater, rue Karl Marx**
**F-78390 Bois D'Arcy (FR)**
Inventeur : **Peyroux Daniel**
**8, Routes des Grandes**
**F-92190 Meudon (FR)**

## Description

La présente invention se rapporte à une électrode utilisée pour le soudage par résistance électrique, et plus particulièrement pour le soudage par points de tôles d'acier doux étamées, galvanisées, plombées...

Comparé au soudage par résistance de l'acier doux non revêtu, le soudage de tôles minces en acier galvanisé ou étamé est rendu difficile par la détérioration rapide de la partie active des électrodes, par un phénomène connu d'encrassement dit de pollution. Ce phénomène réduit très fortement la durée d'utilisation de ces électrodes, en particulier dans le cas de cadences de production élevées comme on en rencontre dans l'industrie de la construction de série et notamment dans la construction automobile.

Généralement, dans le cas de soudage par points, on évalue la durée de service des électrodes en fonction du nombre de points soudés satisfaisants que l'on peut obtenir en soudage à la volée, à la cadence de production, sans opération d'entretien des électrodes et sans modification des réglages de la machine à souder ou du robot de soudage.

Il est possible en soudage par points d'une tôle d'acier doux non revêtue, de réaliser plus de cinquante mille points sans devoir réajuster la partie active de l'électrode, tandis qu'en soudage de la tôle d'acier doux étamée ou galvanisée, un maximum de cinq mille points représente une performance.

La tenue d'une électrode dépend de la nature des matériaux qui la constituent, ces matériaux se détériorant plus ou moins rapidement suivant leur résistance mécanique et leur résistance thermique. Cependant, le problème ne se limite pas au simple choix d'un matériau de bonne résistance mécanique, car la conductibilité électrique du matériau et son aptitude à résister au choc thermique doivent être simultanément satisfaisantes.

En effet, ce n'est pas seulement l'augmentation de la surface active de l'électrode et par suite de la diminution de la densité du courant de soudage qui modifie la longévité des électrodes. La formation d'alliages augmente la résistance de contact entre l'électrode et la tôle, ce qui provoque la localisation d'une partie importante de l'échauffement en cet endroit au détriment de la zone de fusion normale. Cet échauffement accélère l'encrassement de l'électrode, diminue sa résistance mécanique et provoque l'augmentation de la surface de sa partie active.

Il semble donc logique, et cela est couramment utilisé, de concevoir une électrode comprenant un support en alliage fortement conducteur et mécaniquement résistant, et une partie active revêtue d'une couche de métal à très haut point de fusion.

La présente invention se propose d'augmenter fortement la durée d'utilisation de l'électrode, notamment dans le cas du soudage par résistance de tôles minces d'acier doux étamées et galvanisées, non pas seulement par un choix approprié de matériau pour le support et la partie active de cette électrode, mais aussi par un nouveau type d'électrodes encore plus simple et économique.

A cet effet, l'électrode objet de la présente invention, du type comprenant de façon conventionnelle un support et une partie active, est essentiellement caractérisée par une partie active constituée d'une série de lamelles métalliques superposées, reliées entre elles par un moyen de fixation.

Suivant une autre particularité de l'invention, un liant est utilisé comme moyen de fixation de ces lamelles superposées.

Suivant une autre particularité de l'invention, le liant utilisé pour réunir ces lamelles métalliques est une colle uniformément répartie au moins sur la périphérie latérale de celles-ci.

Ces particularités permettent d'accroître considérablement la durée d'utilisation de l'électrode tout en supprimant de façon particulièrement simple, les problèmes techniques associés au phénomène d'encrassement de cette électrode.

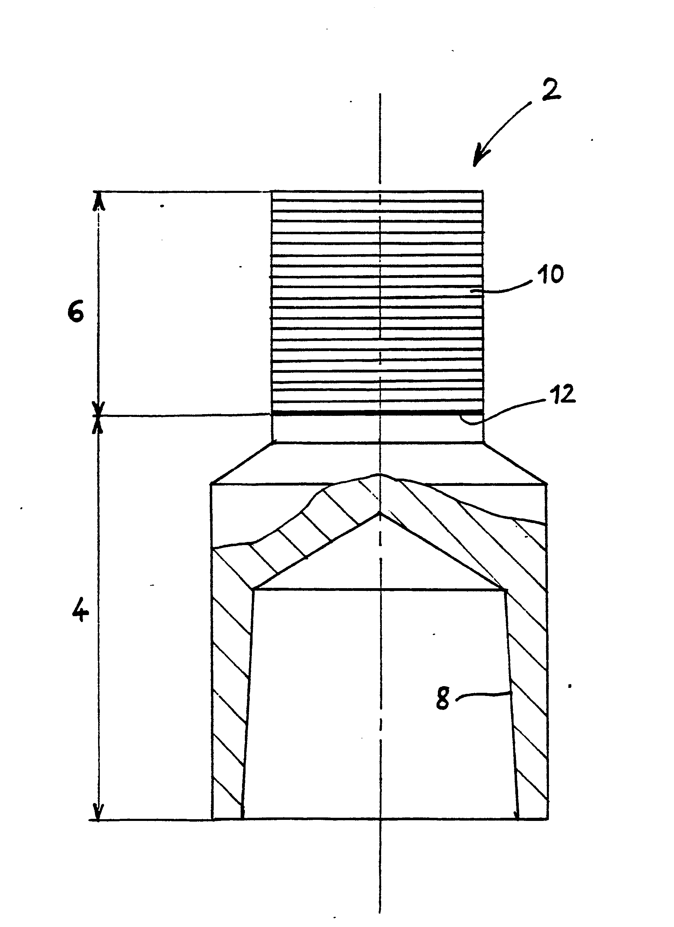

D'autres particularités et avantages de l'invention apparaîtront plus clairement à la lecture de la description qui suit d'un mode de réalisation, donnée à titre d'exemple non limitatif et en référence à la figure unique jointe qui représente une vue en coupe axiale partielle d'une électrode conforme à l'invention.

Sur cette figure, l'électrode perfectionnée de soudage par résistance se présente sous la forme d'une mise rapportée ou embout 2 constituée d'un support 4 et d'une partie active cylindrique 6. Cet embout 2 peut équiper une pince à souder de machine de soudage ou de robot de soudage par l'intermédiaire d'un alésage 8.

Le support 4 en alliage de cuivre reste identique à celui d'une électrode conventionnelle. La partie active 6 comporte un empilage de lamelles ou feuillards 10 reliées entre elles par un liant électro-conducteur.

Ces lamelles 10 en alliage de cuivre présentent une fine épaisseur répétitive comprise entre quelques microns et 0,1 mm.

Le support 4 et la partie active 6 sont réunis par une brasure à base d'argent 12 qui permet d'obtenir une jonction de résistance mécanique élevée.

Le liant servant à rassembler les lamelles 10 en un téton cylindrique 6 peut être une colle à température de polymérisation élevée, par exemple une résine époxy.

Cette colle est répartie uniformément et de préférence sur la périphérie latérale des lamelles 10. Ce liant peut être également une poudre métallique de frittage, par exemple une poudre de bronze, uniformément répartie entre les lamelles superposées 10.

Le fonctionnement de l'électrode précédemment décrite est particulièrement simple.

Lors de l'opération de soudage par points de deux tôles revêtues et après un nombre de points déterminé en fonction des dimensions d'une lamelle, la lamelle active 10 en contact avec la tôle revêtue ne dispose pas d'une durée de temps suffisante pour se polluer de façon importante. Elle s'accroche donc à la tôle revêtue à la suite d'un phénomène de collage par pollution et indentation, et laisse la place à une autre lamelle de la partie active 6 qui elle est intacte. Ce processus peut se répéter jusqu'à la disparition totale de cette partie active au niveau de la brasure 12.

## Revendications

1. Electrode (2) pour le soudage par résistance de tôles polluantes, notamment pour la soudage par point de tôles d'acier doux étamées et galvanisées, du type comprenant un support et une partie active, caractérisée en ce que la partie active (6) est formée par une série de lamelles métalliques superposées (10) reliées entre elles par un moyen de fixation.

2. Electrode suivant la revendication 1, caractérisée en ce qu'un liant est utilisé comme moyen de fixation de ces lamelles superposées (10).

3. Electrode suivant la revendication 2, caractérisée en ce que le liant utilisé est une colle uniformément répartie au moins sur la périphérie latérale de ces lamelles superposées (10).

4. Electrode suivant la revendication 2, caractérisée en ce que le liant utilisé est une poudre métallique de frittage uniformément répartie entre ces lamelles superposées (10).

5. Electrode suivant l'une quelconque des revendications 1 à 4, caractérisée en ce que ces lamelles superposées (10) sont constituées d'un alliage de cuivre.

6. Electrode suivant l'une quelconque des revendications 1 à 4, caractérisée en ce que ces lamelles superposées (10) sont constituées d'un alliage d'aluminium.

7. Electrode suivant l'une quelconque des revendications 1 à 6, caractérisée en ce que ces lamelles superposées (10) présentent une épaisseur uniforme comprise entre quelques microns et 0,1 mm.

8. Electrode suivant l'une quelconque des revendications 1 à 7, caractérisée en ce que le support (4) est constitué d'un alliage de cuivre.

9. Electrode suivant l'une quelconque des revendications 1 à 7, caractérisée en ce que le support (4) est constitué d'un alliage d'aluminium.

10. Electrode suivant l'une quelconque des revendications 1 à 9, caractérisée en ce que la jonction entre le support (4) et la partie active (6) est réalisée au moyen d'une brasure à base d'argent.

## Claims

1. An electrode (2) for resistance welding of polluting metal sheets, in particular for spot welding mild steel sheets which are tinplated and galvanised, of the type comprising a support and an active portion, characterised in that the active portion (6) is formed by a series of superposed metal plate members (10) which are connected together by a fixing means.

2. An electrode according to claim 1 characterised in that a binder is used as the fixing means for said superposed plate members (10).

3. An electrode according to claim 2 characterised in that the binder used is a glue which is uniformly distributed at least over the lateral periphery of said superposed plate members (10).

4. An electrode according to claim 2 characterised in that the binder used is a metal sintering powder uniformly distributed between said superposed plate members (10).

5. An electrode according to any one of claims 1 to 4 characterised in that said superposed plate members (10) are formed from a copper alloy.

6. An electrode according to any one of claims 1 to 4 characterised in that said superposed plate members (10) are formed from an aluminium alloy.

7. An electrode according to any one of claims 1 to 6 characterised in that said superposed plate members (10) are of a uniform thickness of between a few microns and 0.1 mm.

8. An electrode according to any one of claims 1 to 7 characterised in that the support (4) is formed from a copper alloy.

9. An electrode according to any one of claims 1 to 7 characterised in that the support (4) is formed from an aluminium alloy.

10. An electrode according to any one of claims 1 to 9 characterised in that the junction between the support (4) and the active portion (6) is made by means of a silver-base braze.

## Patentansprüche

1. Widerstandsschweißelektrode (2) für verunreinigende Bleche, insbesondere zum Punktschweißen von kohlenstoffarmen verzinnten und galvanisierten Stahlblechen, die eine Halterung und einen aktiven Abschnitt aufweist, dadurch gekennzeichnet, daß der aktive Abschnitt (6) aus einer Reihe von übereinander angeordneten Metall-Lamellen (10) besteht, die untereinander mittels einer Befestigungsanordnung verbunden sind.

2. Elektrode nach Anspruch 1, dadurch gekennzeichnet, daß ein Bindemittel als Befestigungsanordnung für die übereinander angeordneten Lamellen (10) verwendet wird.

3. Elektrode nach Anspruch 2, dadurch gekennzeichnet, daß das verwendete Bindemittel ein gleichmäßig wenigstens entlang des Seitenumfangs der übereinander angeordneten Lamellen (10) verteilter Klebstoff ist.

4. Elektrode nach Anspruch 2, dadurch gekennzeichnet, daß das verwendete Bindemittel ein frittiertes Metallpulver ist, das gleichmäßig zwischen den übereinander angeordneten Lamellen (10) verteilt ist.

5. Elektrode nach einem der Ansprüche 1 bis 4, dadurch gekennzeichnet, daß die übereinander angeordneten Lamellen (10) aus einer Kupferlegierung bestehen.

6. Elektrode nach einem der Ansprüche 1 bis 4, dadurch gekennzeichnet, daß die übereinander angeordneten Lamellen (10) aus einer Aluminiumlegierung bestehen.

7. Elektrode nach einem der Ansprüche 1 bis 6, dadurch gekennzeichnet, daß die übereinander angeordneten Lamellen (10) eine gleichmäßige Dicke zwischen einigen Mikron und 0,1 mm aufweisen.

8. Elektrode nach einem der Ansprüche 1 bis 7, dadurch gekennzeichnet, daß die Halterung (4) aus einer Kupferlegierung besteht.

9. Elektrode nach einem der Ansprüche 1 bis 7, dadurch gekennzeichnet, daß die Halterung (4) aus einer Aluminiumlegierung besteht.

10. Elektrode nach einem der Ansprüche 1 bis 9, dadurch gekennzeichnet, daß die Verbindung zwischen der Halterung (4) und dem aktiven Abschnitt (6) durch eine Hartlötstelle mit einem Silberlot hergestellt ist.